(19) Europäisches Patentamt
European Patent Office
Office européen des brevets

(11) **EP 0 906 250 B1**

(12) **EUROPEAN PATENT SPECIFICATION**

(45) Date of publication and mention
of the grant of the patent:
**27.02.2002 Bulletin 2002/09**

(51) Int Cl.[7]: **C03C 13/00**

(86) International application number:
**PCT/GB97/01667**

(21) Application number: **97927281.2**

(22) Date of filing: **20.06.1997**

(87) International publication number:
**WO 97/49643 (31.12.1997 Gazette 1997/57)**

(54) **Use of P2O5 or B2O3 in inorganic fibres, and saline soluble inorganic fibres**

Verwendung von P2O5 oder B2O3 in anorganischen fasern, und anorganische Fasern, löslich in einer Salzlösung

Utilisation de P2O5 ou B2O3 dans des fibres inorganiques, et fibres inorganiques solubles dans une solution saline

(84) Designated Contracting States:
**DE FR GB IT**

(30) Priority: **21.06.1996 GB 9613023**

(43) Date of publication of application:
**07.04.1999 Bulletin 1999/14**

(73) Proprietor: **THE MORGAN CRUCIBLE COMPANY PLC**
**Windsor, Berkshire SL4 1EP (GB)**

(72) Inventors:
• **JUBB, Gary Anthony**
**Worcestershire DY1o 4TA (GB)**

• **EATON, Paul Nigel**
**Kidderminster, Worcestershire DY11 7DE (GB)**
• **CANTY, Philip John**
**Kidderminster, Worcestershire DY14 9RU (GB)**
• **LOWE WASSELL, Alison Jane**
**Kidderminster, Worcestershire DY11 5NG (GB)**

(74) Representative: **Boff, James Charles et al**
**Phillips & Leigh 5 Pemberton Row**
**London EC4A 3BA (GB)**

(56) References cited:
WO-A-89/12032          WO-A-92/09536
WO-A-93/15028          WO-A-93/22251
WO-A-95/29135          WO-A-96/01793
DE-A- 4 417 230

**Description**

This invention relates to saline soluble inorganic fibres.

Saline soluble inorganic fibres have been described in several patent specifications, see for example WO93/15028. Fibres are required to be soluble in saline solution so that inhaled or ingested fibres dissolve rather than providing a source of irritation or otherwise affecting health. WO93/15028 showed that fibres comprising $SiO_2$, CaO and MgO and having a silica content of greater than 58% (or greater than 58% plus 0.5 times (wt%MgO - 10) if MgO > 10wt%) had suitable shrinkage characteristics at 800°C and 1000°C to be usable as refractory materials. A further feature of WO93/15028 was the use of the percentage of non-bridging oxygens present to predict the solubility of fibres in physiological saline solution.

Various subsequent applications have described the effect of $P_2O_5$ and $B_2O_3$ on solubility - see for example WO95/29135. $P_2O_5$ is alleged to have a solubilising effect on such fibres. WO93/22251 refers to use of $P_2O_5$ and $Na_2O$ to improve solubility of fibres. WO89/12032 and DE 4417230 disclose fibres containing $SiO_2$, CaO, MgO, and $B_2O_3$.

The German government have proposed a fibre classification which turns on a variable $K_I$ which is defined as:

$$K_I = \Sigma(Na,K,B,Ca,Mg,Ba\text{ -oxide}) - 2^* \text{ Al-oxide}$$

(the amounts of the oxides being expressed as weight %)

According to the proposed fibre classification if $K_I$ is greater than 40 the fibre requires no health warnings. If $K_I$ lies between 30 and 40 the fibre requires health warnings to be made. If $K_I$ is less than 30 more serious marking is required (it is labelled as a carcinogen). It is readily apparent that it is difficult to provide a high $K_I$ fibre ($K_I$>40) while still providing a refractory fibre like that of WO93/15028 ($SiO_2$>58wt%), there being a very narrow window of compositions to meet.

As a result of investigating fibre compositions that may meet the fibre classification and yet still be refractory enough to meet the standard of WO93/15028 (shrinkage of less than 3.5% at both 800°C and 1000°C) the applicants have found that addition of $P_2O_5$ to compositions allows a broader range of refractory fibres to be produced than had previously been appreciated.

They have also found that $B_2O_3$, previously thought to be extremely detrimental to refractoriness, has a similar, although lesser, effect and that both $P_2O_5$ and $B_2O_3$ may be used in the fibres of WO93/15028.

The applicants have found that the refractoriness of the $P_2O_5$ and $B_2O_3$ containing fibres of the present invention is dependent on the sum of the amounts of $SiO_2$ and $P_2O_5$ (expressed in wt%)

It appears that a further factor that may be important in determining the refractoriness of a fibre is the percentage of non-bridging oxygens. If this percentage is 61.4% or more (calculated on the basis of the amounts of the components $SiO_2$, CaO, MgO, $P_2O_5$, and $B_2O_3$) the fibres tend to fail shrinkage tests at 800°C and 1000°C (failure being defined as a shrinkage of 3.5% or more).

The scope of the invention is apparent from the claims in the light of the following description.

The percentage of non-bridging oxygens (%N.B.O.) is calculated by converting the weight percentages of $SiO_2$, CaO, MgO, $P_2O_5$, and $B_2O_3$ to molar amounts and inserting these amounts into the equation:-

$$\%N.B.O. = \frac{2^*(CaO + MgO + P_2O_5 + B_2O_3)}{(2^*SiO_2 + CaO + MgO + 5 \times P_2O_5 + 3 \times B_2O_3)} \times 100$$

The reason the amounts of CaO, MgO, $P_2O_5$, and $B_2O_3$ are doubled in the numerator to this equation is that each contributes two non-bridging oxygens. The reason terms are multiplied in the denominator to this equation is to reflect the number of oxygen atoms each molecular formula possesses.

Table I shows the results of a first set of shrinkage and solubility tests on compositions comprising $SiO_2$, CaO, MgO, $P_2O_5$, and $B_2O_3$ as main ingredients. In this table the analysed compositions are normalised to 100%. It is clear from these compositions that where the percentage of non-bridging oxygens calculated on the basis of the amounts of the above named components is greater than 61.4% (those fibres lying above line A of Table I) the fibres fail the shrinkage tests, having shrinkages of greater than 3.5% at either or both of 800°C and 1000°C.

WO93/15028 stressed the importance of alumina content and the fibres lying between lines B and A of Table I show that alumina contents of greater than 1wt% are damaging to the shrinkage properties of fibres.

The applicants have also found that the combined amount of CaO and MgO is important. Those fibres lying between lines C and B have a combined CaO and MgO content of greater than 42wt% and also fail the shrinkage tests.

The fibres below line C have a percentage of non-bridging oxygens less than 61.4%, an alumina content of less than 1 wt%, and a combined CaO and MgO content of less than 42wt%. All of these fibres pass the shrinkage tests. These fibres fall within the compositional ranges:-

| | |
|---|---|
| $SiO_2$ | 52.4 - 57.85wt% |
| CaO | 22.2 - 39.4wt% |
| MgO | 1.96 - 17.4wt% |
| $P_2O_5$ | 0.82 - 7.8wt% |
| $B_2O_3$ | 0 - 1.95vt% |
| $Al_2O_3$ | <1 wt% |

The solubility results presented in Table I were obtained by the methods described in WO93/15028 and show a high solubility for all of the fibres produced.

It can be seen that all of the fibres below line C have a $K_I$ of more than 35 and more than half have a $K_I$ of more than 40.

Further testing resulted in the data presented in Table II. The data presented are as in table I but an additional column entitled deviation shows the result of looking to the difference between the sum of the $SiO_2$ and $P_2O_5$ contents and the $SiO_2$ amount predicted to be needed by WO93/15028 for a fibre to be refractory (shrinkage of less than 3.5% at both 800°C and 1000°C. The figure given is found by calculating the sum

$$SiO_2 + P_2O_5 - (58 + (\text{if MgO} > 10, 0.5 \times (\text{MgO} - 10) \text{ else } 0))$$

If this is less than -2.4wt% the fibres fail. The fibres that failed are shown in plain text, those that passed in bold text, and those that were difficult to form in italics.

More than 12.5wt% $P_2O_5$ is undesirable as it causes difficulties in making the fibres.

While the above description and the claims refer to $P_2O_5$, $B_2O_3$, $SiO_2$, CaO and MgO it will be clear to the person skilled in the art that the pure materials need not be used and that provision of these components in combined form (e.g. provision of $P_2O_5$ in the form of mixed oxide phosphates) is part of the invention.

Table I

| Code LTP | Chemical Composition (XRF - Weight percent) | | | | | | | | | | | KI | Shrinkage | | Solubility (ppm) | | | | | CaO+MgO | % N.B.O. | |
|---|---|---|---|---|---|---|---|---|---|---|---|---|---|---|---|---|---|---|---|---|---|---|
| | CaO | MgO | P2O5 | SiO2 | Al2O3 | Na2O | K2O | B2O3 | Fe2O3 | ZrO2 | SrO | | 800°C | 1000°C | CaO | MgO | SiO2 | B2O3 | Total | | | |
| LTP 8 | 24.95 | 19.18 | 3.41 | 51.69 | 0.25 | 0.30 | 0.05 | | 0.17 | <0.05 | <0.05 | 44.0 | 40.0 | 40.0 | 53 | 98 | 177 | | 328 | 44.14 | 68.5% | |
| LTP 9 | 24.81 | 18.66 | 5.10 | 50.42 | 0.38 | 0.31 | <0.05 | | 0.17 | 0.15 | <0.05 | 43.0 | 23.9 | 38.8 | 59 | 115 | 193 | | 367 | 43.47 | 68.1% | |
| LTP11 | 25.13 | 19.07 | 2.51 | 52.54 | 0.28 | 0.25 | 0.05 | | 0.17 | <0.05 | <0.05 | 43.9 | 46.8 | 39.1 | 55 | 94 | 174 | | 323 | 44.20 | 68.0% | |
| LTP16 | 31.83 | 12.27 | 3.39 | 51.59 | 0.26 | 0.42 | 0.06 | | 0.17 | <0.05 | <0.05 | 44.1 | 49.1 | | 79 | 76 | 200 | | 355 | 44.11 | 66.1% | |
| LTP10 | 24.48 | 17.89 | 2.48 | 54.46 | 0.21 | 0.28 | 0.05 | | 0.16 | <0.05 | <0.05 | 42.3 | 3.62 | 19.1 | 58 | 90 | 169 | | 317 | 42.37 | 64.7% | |
| LTP 4 | 24.04 | 17.78 | 3.31 | 53.85 | 0.31 | 0.26 | 0.05 | | 0.15 | 0.25 | <0.05 | 41.5 | 3.71 | 4.77 | 56 | 95 | 180 | | 331 | 41.83 | 64.3% | |
| LTP 5 | 24.22 | 17.17 | 4.91 | 52.72 | 0.33 | 0.30 | <0.05 | | 0.14 | 0.21 | <0.05 | 41.0 | 3.63 | 5.39 | 65 | 106 | 191 | | 362 | 41.40 | 64.1% | |
| LTP17 | 38.39 | 5.54 | 3.41 | 51.22 | 0.40 | 0.42 | 0.07 | | 0.16 | 0.38 | <0.05 | 43.6 | 45.2 | 43.8 | 83 | 32 | 191 | | 306 | 43.94 | 63.9% | |
| LTP23 | 38.62 | 5.56 | 2.57 | 52.23 | 0.34 | 0.46 | 0.07 | | 0.15 | <0.05 | <0.05 | 44.0 | 42.90 | | 82 | 29 | 199 | | 310 | 44.18 | 63.7% | |
| LTP14 | 30.93 | 11.01 | 4.90 | 51.96 | 0.30 | 0.45 | 0.05 | | 0.15 | 0.25 | <0.05 | 41.8 | 3.24 | 3.92 | 78 | 69 | 191 | | 338 | 41.95 | 63.0% | |
| LTP13 | 11.28 | 27.95 | 3.26 | 57.2 | <0.05 | 0.13 | <0.05 | | 0.17 | <0.05 | <0.05 | 39.4 | 5.72 | 5.26 | 30 | 117 | 188 | | 335 | 39.23 | 63.0% | |
| LTP12 | 30.93 | 11.35 | 3.36 | 53.52 | 0.32 | 0.31 | 0.06 | | 0.15 | <0.05 | <0.05 | 42.0 | 2.55 | 30.1 | 82 | 72 | 207 | | 361 | 42.27 | 62.6% | |
| LTP20 | 31.05 | 11.35 | 2.52 | 54.14 | 0.32 | 0.31 | 0.06 | | 0.16 | 0.10 | <0.05 | 42.1 | 3.38 | 29.7 | 85 | 71 | 200 | | 356 | 42.40 | 62.6% | |
| LTP15 | 36.89 | 5.70 | 5.05 | 51.22 | 0.31 | 0.43 | 0.10 | | 0.16 | 0.13 | <0.05 | 42.5 | 3.41 | 5.03 | 88 | 35 | 204 | | 327 | 42.59 | 62.2% | |
| LTP 3 | 22.89 | 16.69 | 6.70 | 52.58 | 0.25 | 0.29 | <0.05 | | 0.14 | 0.46 | <0.05 | 39.4 | 23.3 | 29.5 | 43 | 166 | 141 | | 350 | 39.58 | 61.9% | |
| LTP 7 | 10.37 | 27.85 | 3.29 | 58.18 | <0.05 | 0.15 | <0.05 | | 0.16 | <0.05 | <0.05 | 38.4 | 10.9 | 15.5 | 36 | 132 | 152 | | 320 | 38.23 | 61.4% | A |
| LTP52 | 24.9 | 11.5 | 4.89 | 54.8 | 2.06 | 0.28 | 0.05 | <0.05 | 1.38 | <0.05 | <0.05 | 32.6 | 32.1 | . | 72 | 74 | 140 | | 286 | 36.40 | 56.0% | |
| LTP51 | 28.7 | 11 | 1.62 | 56.6 | 1.38 | 0.29 | 0.07 | <0.05 | 0.26 | <0.05 | <0.05 | 37.3 | 3.07 | 3.61 | 82 | 69 | 159 | | 310 | 39.70 | 58.4% | B |
| LTP29 | 40.29 | 2.09 | 1.23 | 55.09 | 0.43 | 0.39 | 0.12 | | 0.19 | 0.17 | <0.05 | 42.0 | 45.9 | | 76 | 10 | 206 | | 292 | 42.38 | 58.8% | |
| LTP21 | 36.62 | 5.58 | 2.54 | 54.19 | 0.39 | 0.46 | 0.07 | | 0.15 | <0.05 | <0.05 | 42.0 | | 35.5 | 58 | 34 | 208 | | 300 | 42.20 | 60.3% | C |
| LTP30 | 39.40 | 1.96 | 2.22 | 55.25 | 0.45 | 0.41 | 0.10 | | 0.21 | <0.05 | <0.05 | 41.0 | 1.74 | 2.04 | 72 | 11 | 209 | | 292 | 41.36 | 57.5% | |
| LTP41 | 31.36 | 9.48 | 0.85 | 55.63 | 0.27 | 0.30 | 0.07 | 1.88 | 0.16 | <0.05 | <0.05 | 42.5 | 1.20 | 2.32 | 87 | 60 | 194 | 20 | 361 | 40.84 | 60.0% | |
| LTP 6 | 29.83 | 10.45 | 3.34 | 55.65 | 0.21 | 0.32 | 0.05 | | 0.15 | <0.05 | <0.05 | 40.2 | 1.89 | 2.76 | 65 | 52 | 172 | | 289 | 40.28 | 59.0% | |
| LTP34 | 30.44 | 9.81 | 1.68 | 57.3 | 0.25 | 0.31 | 0.07 | | 0.15 | <0.05 | <0.05 | 40.1 | 1.40 | 1.79 | 76 | 51 | 188 | | 315 | 40.25 | 58.0% | |
| LTP43 | 30.51 | 9.68 | 1.68 | 56.19 | 0.28 | 0.32 | 0.07 | 1.11 | 0.15 | <0.05 | <0.05 | 41.1 | 0.97 | 1.84 | 62 | 66 | 187 | 12 | 327 | 40.19 | 58.8% | |
| LTP42 | 30.55 | 9.56 | 0.86 | 57.13 | 0.27 | 0.33 | 0.07 | 1.08 | 0.15 | <0.05 | <0.05 | 41.1 | 1.04 | 1.81 | 75 | 65 | 192 | 12 | 344 | 40.12 | 58.2% | |
| LTP47 | 22.2 | 17.4 | 3.98 | 55.2 | 0.31 | 0.31 | 0.05 | <0.05 | 0.1 | <0.05 | <0.05 | 39.3 | 1.97 | 2.14 | 58 | 104 | 197 | | 359 | 39.60 | 61.0% | |
| LTP38 | 34.82 | 4.73 | 0.82 | 57.84 | 0.31 | 0.30 | 0.08 | 0.94 | 0.15 | <0.05 | <0.05 | 40.3 | 1.07 | 1.40 | 83 | 25 | 175 | 9 | 292 | 39.56 | 55.4% | |
| LTP 2 | 23.35 | 16.10 | 4.87 | 54.25 | 0.46 | 0.24 | <0.05 | | 0.16 | 0.58 | <0.05 | 38.8 | 2.24 | 3.05 | 53 | 96 | 167 | | 316 | 39.45 | 60.8% | |
| LTP39 | 34.35 | 4.73 | 1.67 | 57.39 | 0.27 | 0.30 | 0.08 | 1.06 | 0.14 | <0.05 | <0.05 | 40.0 | 1.47 | 1.93 | 32 | 33 | 203 | 16 | 284 | 39.08 | 55.2% | |
| LTP 1 | 23.29 | 15.66 | 3.33 | 57.01 | 0.24 | 0.22 | 0.06 | | 0.14 | <0.05 | 0.05 | 38.7 | 1.31 | 1.77 | 63 | 89 | 175 | | 327 | 38.94 | 58.7% | |
| LTP48 | 32 | 6.87 | 7.8 | 52.4 | 0.52 | 0.34 | 0.05 | <0.05 | 0.15 | 0.18 | <0.05 | 38.2 | 1.24 | 1.53 | 84 | 48 | 205 | | 337 | 38.87 | 57.7% | |
| LTP40 | 33.67 | 4.75 | 0.86 | 57.85 | 0.38 | 0.31 | 0.08 | 1.95 | 0.15 | <0.05 | <0.05 | 40.0 | 1.15 | 2.39 | 40 | 32 | 194 | 25 | 291 | 38.42 | 54.5% | |
| LTP26 | 33.69 | 4.56 | 3.73 | 56.95 | 0.36 | 0.43 | 0.06 | | 0.14 | 0.07 | <0.05 | 38.0 | 1.22 | 1.40 | 91 | 28 | 193 | | 312 | 38.25 | 54.0% | |
| LTP27 | 28.91 | 9.33 | 3.66 | 57.32 | 0.22 | 0.36 | 0.05 | | 0.14 | <0.05 | <0.05 | 38.2 | 0.99 | 1.16 | 67 | 48 | 173 | | 288 | 38.24 | 55.5% | |
| LTP46 | 28.4 | 8.69 | 2.67 | 59 | 0.29 | 0.33 | 0.06 | <0.05 | 0.13 | <0.05 | <0.05 | 36.9 | 0.91 | 0.99 | 71 | 46 | 175 | | 292 | 37.09 | 53.3% | |

TABLE II (Part 1)

| Code LTP | Chemical Composition (XRF - Weight percent) | | | | | | | | | | | KI | Shrinkage | | | Solubility (ppm) | | | | | CaO+MgO | % N.B.O. |
|---|---|---|---|---|---|---|---|---|---|---|---|---|---|---|---|---|---|---|---|---|---|---|
| | CaO | MgO | P2O5 | SiO2 | Al2O3 | Na2O | K2O | B2O3 | Fe2O3 | ZrO2 | SrO | | 800°C | 1000°C | Deviation | CaO | MgO | SiO2 | B2O3 | Total | | |
| LTP 8 | 24.95 | 19.18 | 3.41 | 51.69 | 0.25 | 0.30 | 0.05 | | 0.17 | | | 43.99 | 40.00 | 40.00 | -7.49 | 53 | 98 | 177 | | 328 | 44.14 | 68.5% |
| LTP11 | 25.13 | 19.07 | 2.51 | 52.54 | 0.28 | 0.25 | 0.05 | | 0.17 | | | 43.94 | 46.80 | 39.10 | -7.48 | 55 | 94 | 174 | | 323 | 44.20 | 68.0% |
| LTP49 | 32.35 | 6.74 | | 50.54 | 0.57 | 0.40 | 0.08 | 9.17 | 0.14 | | | 47.60 | 2.65 | 15.70 | -7.46 | 79 | 41 | 214 | 129 | 463 | 39.09 | 62.1% |
| LTP 9 | 24.81 | 18.66 | 5.10 | 50.42 | 0.38 | 0.31 | | | 0.17 | 0.15 | | 43.03 | 23.90 | 38.80 | -6.81 | 59 | 115 | 193 | | 367 | 43.47 | 68.1% |
| LTP67 | 15.17 | 25.18 | 5.06 | 54.00 | 0.19 | 0.25 | | | 0.15 | | | 40.22 | 5.70 | - | -6.53 | | | | | | 40.35 | 64.9% |
| LTP13 | 11.28 | 27.95 | 3.26 | 57.20 | | 0.13 | | | 0.17 | | | 39.36 | 5.72 | 5.26 | -6.51 | 30 | 117 | 188 | | 335 | 39.23 | 63.0% |
| LTP62 | 14.99 | 24.54 | 2.52 | 57.24 | 0.35 | 0.19 | | | 0.16 | | | 39.02 | 4.48 | - | -5.51 | 25 | 66 | 119 | | 210 | 39.53 | 62.3% |
| LTP 7 | 10.37 | 27.85 | 3.29 | 58.18 | | 0.15 | | | 0.16 | | | 38.37 | 10.90 | 15.50 | -5.46 | 36 | 132 | 152 | | 320 | 38.23 | 61.4% |
| LTP10 | 24.48 | 17.89 | 2.48 | 54.46 | 0.21 | 0.28 | 0.05 | | 0.16 | | | 42.28 | 3.62 | 19.10 | -5.01 | 58 | 90 | 169 | | 317 | 42.37 | 64.7% |
| LTP 4 | 24.04 | 17.78 | 3.31 | 53.85 | 0.31 | 0.26 | 0.05 | | 0.15 | 0.25 | | 41.52 | 3.71 | 4.77 | -4.73 | 56 | 95 | 180 | | 331 | 41.83 | 64.3% |
| LTP16 | 31.83 | 12.27 | 3.39 | 51.59 | 0.26 | 0.42 | 0.06 | | 0.17 | | | 44.07 | 49.10 | - | -4.15 | 79 | 76 | 200 | | 355 | 44.11 | 66.1% |
| LTP 5 | 24.22 | 17.17 | 4.91 | 52.72 | 0.33 | 0.30 | | | 0.14 | 0.21 | | 41.04 | 3.63 | 5.39 | -3.96 | 65 | 106 | 191 | | 362 | 41.40 | 64.1% |
| LTP59 | 32.13 | 10.47 | 12.93 | 41.37 | 2.31 | 0.56 | 0.05 | | 0.17 | | | 38.59 | 43.20 | - | -3.94 | 42 | 41 | 179 | | 262 | 42.60 | 69.3% |
| LTP50 | 31.00 | 10.40 | | 54.50 | 0.36 | 0.31 | 0.08 | 3.19 | 0.16 | | | 44.26 | 29.80 | - | -3.70 | 79 | 58 | 200 | 30 | 367 | 41.40 | 62.0% |
| LTP17 | 38.39 | 5.54 | 3.41 | 51.22 | 0.40 | 0.42 | 0.07 | | 0.16 | 0.38 | | 43.62 | 45.20 | 43.80 | -3.37 | 83 | 32 | 191 | | 306 | 43.94 | 63.9% |
| LTP56 | 34.38 | 9.46 | 14.72 | 40.02 | 0.72 | 0.55 | | | 0.16 | | | 42.95 | 9.98 | - | -3.26 | 60 | 57 | 196 | | 313 | 43.84 | 70.5% |
| LTP23 | 38.62 | 5.56 | 2.57 | 52.23 | 0.34 | 0.46 | 0.07 | | 0.15 | | | 44.03 | 42.90 | - | -3.20 | 82 | 29 | 199 | | 310 | 44.18 | 63.7% |
| LTP57 | 34.73 | 9.55 | 19.83 | 35.24 | 0.23 | 0.26 | | | 0.15 | | | 44.08 | - | - | -2.93 | | | | | 0 | 44.28 | 73.0% |
| LTP70 | 24.38 | 14.20 | | 57.52 | 0.44 | 0.18 | 0.08 | 3.01 | 0.18 | | | 40.97 | 3.63 | 7.86 | -2.58 | 75 | 73 | 255 | 21 | 424 | 38.58 | 58.7% |
| LTP63 | 14.61 | 22.87 | 2.53 | 59.45 | 0.27 | 0.12 | | | 0.16 | | | 37.06 | 9.57 | - | -2.46 | 17 | 108 | 83 | | 208 | 37.48 | 58.4% |
| *Above here compositions have deviation of more than 2.4wt%* | | | | | | | | | | | | | | | | | | | | | | |
| LTP54 | 29.40 | 8.73 | 14.55 | 46.68 | 0.07 | 0.44 | | | 0.13 | | | 38.43 | - | - | 3.23 | | | | | | 38.13 | 60.1% |
| LTP61 | 32.46 | 9.86 | 14.02 | 42.67 | 0.09 | 0.70 | 0.05 | | 0.15 | | | 42.89 | 3.44 | 3.65 | -1.31 | | | | | | 42.32 | 67.4% |
| LTP60 | 31.46 | 9.58 | 12.64 | 44.91 | 0.69 | 0.54 | 0.05 | | 0.14 | | | 40.25 | - | - | -0.45 | | | | | | 41.04 | 64.8% |
| *Above here compositions have P2O5 content more than 12.5wt%* | | | | | | | | | | | | | | | | | | | | | | |
| LTP52 | 24.93 | 11.52 | 4.90 | 54.88 | 2.06 | 0.28 | 0.05 | | 1.38 | | | 32.66 | 32.10 | - | 1.02 | 72 | 74 | 140 | | 286 | 36.45 | 56.1% |
| LTP51 | 28.72 | 11.01 | 1.62 | 56.65 | 1.38 | 0.29 | 0.07 | | 0.26 | | | 37.33 | 3.07 | 3.61 | -0.24 | 82 | 69 | 159 | | 310 | 39.73 | 58.4% |
| *Above here fibres have Al2O3 content above 1 wt%* | | | | | | | | | | | | | | | | | | | | | | |
| LTP15 | 36.89 | 5.70 | 5.05 | 51.22 | 0.31 | 0.43 | 0.10 | | 0.16 | 0.13 | | 42.50 | 3.41 | 5.03 | -1.72 | 88 | 35 | 204 | | 327 | 42.59 | 62.2% |
| LTP14 | 30.93 | 11.01 | 4.90 | 51.96 | 0.30 | 0.45 | 0.05 | | 0.15 | 0.25 | | 41.85 | 3.24 | 3.92 | -1.65 | 78 | 69 | 191 | | 338 | 41.95 | 63.0% |
| LTP58 | 32.93 | 9.77 | 12.01 | 44.34 | 0.19 | 0.53 | 0.05 | | 0.19 | | | 42.90 | 2.62 | 2.78 | -1.65 | 57 | 42 | 223 | | 322 | 42.70 | 67.0% |
| LTP55 | 32.58 | 9.47 | 9.65 | 46.79 | 0.84 | 0.46 | 0.05 | | 0.17 | | | 40.88 | 1.72 | 1.95 | -1.56 | 71 | 54 | 203 | | 328 | 42.05 | 65.1% |
| LTP53 | 29.34 | 9.84 | 9.58 | 50.26 | 0.17 | 0.56 | 0.05 | | 0.15 | 0.05 | | 39.45 | 0.01 | 0.00 | 1.84 | 71 | 83 | 222 | | 376 | 39.18 | 60.1% |
| *Above here SiO2 content less than 52wt%* | | | | | | | | | | | | | | | | | | | | | | |

EP 0 906 250 B1

TABLE II (Part 2)

| Code | Chemical Composition (XRF - Weight percent) | | | | | | | | | | | Ki | Shrinkage | | | Solubility (ppm) | | | | | CaO+MgO | % N.B.O. |
|---|---|---|---|---|---|---|---|---|---|---|---|---|---|---|---|---|---|---|---|---|---|---|
| LTP | CaO | MgO | P2O5 | SiO2 | Al2O3 | Na2O | K2O | B2O3 | Fe2O3 | ZrO2 | SrO | | 800°C | 1000°C | Deviation | CaO | MgO | SiO2 | B2O3 | Total | CaO+MgO | |
| LTP 3 | 22.89 | 16.69 | 6.70 | 52.58 | 0.25 | 0.29 | | | 0.14 | 0.46 | | 39.37 | 23.30 | 29.50 | -2.07 | 43 | 166 | 141 | | 350 | 39.58 | 61.9% |
| LTP20 | 31.05 | 11.35 | 2.52 | 54.14 | 0.32 | 0.31 | 0.06 | | 0.16 | 0.10 | | 42.13 | 3.38 | 29.70 | -2.01 | 85 | 71 | 200 | | 356 | 42.40 | 62.6% |
| LTP 2 | 23.35 | 16.10 | 4.87 | 54.25 | 0.46 | 0.24 | | | 0.16 | 0.58 | | 38.77 | 2.24 | 3.05 | -1.93 | 53 | 96 | 167 | | 316 | 39.45 | 60.8% |
| LTP12 | 30.93 | 11.35 | 3.36 | 53.52 | 0.32 | 0.31 | 0.06 | | 0.15 | | | 42.00 | 2.55 | 30.10 | -1.79 | 82 | 72 | 207 | | 361 | 42.27 | 62.6% |
| LTP21 | 36.62 | 5.58 | 2.54 | 54.19 | 0.39 | 0.46 | 0.07 | | 0.15 | | | 41.95 | - | 35.50 | -1.27 | 58 | 34 | 208 | | 300 | 42.20 | 60.3% |
| LTP48 | 31.90 | 6.85 | 7.78 | 52.24 | 0.52 | 0.34 | 0.05 | | 0.15 | 0.18 | | 38.10 | 1.24 | 1.53 | 2.02 | 84 | 48 | 205 | | 337 | 38.75 | 57.7% |
| Above here SiO2 content 52wt% to less than 55wt% | | | | | | | | | | | | | | | | | | | | | | |
| LTP47 | 22.30 | 17.48 | 4.00 | 55.45 | 0.31 | 0.31 | 0.05 | | 0.10 | | | 39.52 | 1.97 | 2.14 | -2.29 | 58 | 104 | 197 | | 359 | 39.78 | 61.0% |
| LTP64 | 20.81 | 18.41 | 2.52 | 57.63 | 0.22 | 0.26 | | | 0.14 | | | 39.04 | 3.01 | 3.73 | -2.05 | 46 | 76 | 197 | | 319 | 39.22 | 59.7% |
| LTP68 | 20.08 | 18.77 | 4.55 | 55.92 | 0.30 | 0.24 | | | 0.14 | | | 38.49 | 3.90 | 4.16 | -1.92 | 51 | 89 | 226 | | 366 | 38.85 | 60.2% |
| LTP29 | 40.29 | 2.09 | 1.23 | 55.09 | 0.43 | 0.39 | 0.12 | | 0.19 | 0.17 | | 42.03 | 45.85 | - | -1.68 | 76 | 10 | 206 | | 292 | 42.38 | 58.8% |
| LTP41 | 31.36 | 9.48 | 0.85 | 55.63 | 0.27 | 0.30 | 0.07 | 1.88 | 0.16 | | | 42.55 | 1.20 | 2.32 | -1.52 | 87 | 60 | 194 | 20 | 361 | 40.84 | 60.0% |
| LTP71 | 38.31 | 0.65 | | 56.51 | 0.55 | 0.20 | 0.09 | 3.54 | 0.14 | | | 41.69 | 0.59 | 1.43 | -1.49 | 73 | 2 | 278 | 55 | 408 | 38.96 | 54.9% |
| LTP30 | 39.40 | 1.96 | 2.22 | 55.25 | 0.45 | 0.41 | 0.10 | | 0.21 | | | 40.96 | 1.74 | 2.04 | -0.53 | 72 | 11 | 209 | | 292 | 41.36 | 57.5% |
| LTP 1 | 23.29 | 15.66 | 3.33 | 57.01 | 0.24 | 0.22 | 0.06 | | 0.14 | | 0.05 | 38.74 | 1.31 | 1.77 | -0.49 | 63 | 89 | 175 | | 327 | 38.94 | 58.7% |
| LTP43 | 30.51 | 9.68 | 1.68 | 56.19 | 0.28 | 0.32 | 0.07 | 1.11 | 0.15 | | | 41.13 | 0.97 | 1.84 | -0.12 | 62 | 66 | 187 | 12 | 327 | 40.19 | 58.8% |
| LTP37 | 35.40 | 4.77 | | 57.92 | 0.31 | 0.31 | 0.09 | 1.05 | 0.15 | | | 40.99 | 1.57 | 2.13 | -0.08 | 37 | 30 | 195 | 13 | 275 | 40.16 | 56.1% |
| LTP32 | 30.01 | 8.53 | | 57.95 | 0.32 | 0.23 | 0.09 | 2.69 | 0.18 | | | 40.92 | 1.68 | 2.83 | -0.05 | 80 | 46 | 184 | 24 | 334 | 38.54 | 56.3% |
| LTP73 | 36.93 | 0.62 | | 57.96 | 0.49 | 0.23 | 0.09 | 3.54 | 0.13 | | | 40.43 | 1.23 | 3.00 | -0.04 | 76 | 2 | 264 | 40 | 382 | 37.55 | 52.6% |
| LTP42 | 30.55 | 9.56 | 0.86 | 57.13 | 0.27 | 0.33 | 0.07 | 1.08 | 0.15 | | | 41.06 | 1.04 | 1.81 | -0.02 | 75 | 65 | 192 | 12 | 344 | 40.12 | 58.2% |
| LTP38 | 34.82 | 4.73 | 0.82 | 57.84 | 0.31 | 0.30 | 0.08 | 0.94 | 0.15 | | | 40.26 | 1.07 | 1.40 | 0.66 | 83 | 25 | 175 | 9 | 292 | 39.56 | 55.4% |
| LTP40 | 33.67 | 4.75 | 0.86 | 57.85 | 0.38 | 0.31 | 0.08 | 1.95 | 0.15 | | | 40.00 | 1.15 | 2.39 | 0.71 | 40 | 32 | 194 | 25 | 291 | 38.42 | 54.5% |
| LTP 6 | 29.83 | 10.45 | 3.34 | 55.65 | 0.21 | 0.32 | 0.05 | | 0.15 | | | 40.23 | 1.89 | 2.76 | 0.76 | 65 | 52 | 172 | | 289 | 40.28 | 59.0% |
| LTP69 | 19.17 | 17.56 | 4.66 | 57.93 | 0.31 | 0.23 | | | 0.13 | | | 36.34 | 1.23 | 1.68 | 0.81 | 49 | 88 | 241 | | 378 | 36.73 | 56.5% |
| LTP34 | 30.44 | 9.81 | 1.68 | 57.30 | 0.25 | 0.31 | 0.07 | | 0.15 | | | 40.13 | 1.40 | 1.79 | 0.98 | 76 | 51 | 188 | | 315 | 40.25 | 58.0% |
| LTP39 | 34.35 | 4.73 | 1.67 | 57.39 | 0.27 | 0.30 | 0.08 | 1.06 | 0.14 | | | 39.98 | 1.47 | 1.93 | 1.06 | 32 | 33 | 203 | 16 | 284 | 39.08 | 55.2% |
| LTP26 | 33.69 | 4.56 | 3.73 | 56.95 | 0.36 | 0.43 | 0.06 | | 0.14 | 0.07 | | 38.02 | 1.22 | 1.40 | 2.68 | 91 | 28 | 193 | | 312 | 38.25 | 54.0% |
| LTP27 | 28.91 | 9.33 | 3.66 | 57.32 | 0.22 | 0.36 | 0.05 | | 0.14 | | | 38.21 | 0.99 | 1.16 | 2.99 | 67 | 48 | 173 | | 288 | 38.24 | 55.5% |
| Above here SiO2 content 55wt% to less than 58wt% | | | | | | | | | | | | | | | | | | | | | | |

TABLE II (Part 3)

| Code | Chemical Composition (XRF - Weight percent) | | | | | | | | | | | Kl | Shrinkage | | | Solubility (ppm) | | | | | % N.B.O. | |
|---|---|---|---|---|---|---|---|---|---|---|---|---|---|---|---|---|---|---|---|---|---|---|
| LTP | CaO | MgO | P2O5 | SiO2 | Al2O3 | Na2O | K2O | B2O3 | Fe2O3 | ZrO2 | SrO | | 800°C | 1000°C | Deviation | CaO | MgO | SiO2 | B2O3 | Total | CaO+MgO | |
| LTP66 | 15.65 | 21.16 | 4.38 | 58.17 | 0.24 | 0.25 | | | 0.15 | | | 36.58 | 2.65 | 3.19 | -1.03 | 30 | 84 | 169 | | 283 | 36.81 | 57.7% |
| LTP65 | 20.36 | 17.74 | 2.50 | 58.75 | 0.30 | 0.22 | | | 0.13 | | | 37.72 | 2.28 | 2.37 | -0.62 | 41 | 68 | 185 | | 294 | 38.10 | 57.6% |
| LTP72 | 22.67 | 13.60 | | 59.64 | 0.37 | 0.27 | 0.06 | 3.25 | 0.14 | | | 39.11 | 3.37 | 6.16 | -0.16 | 49 | 56 | 197 | 23 | 325 | 36.27 | 55.0% |
| LTP35 | 32.72 | 4.76 | | 58.60 | 0.28 | 0.31 | 0.08 | 3.09 | 0.15 | | | 40.40 | 1.65 | 3.85 | 0.60 | 88 | 26 | 179 | 29 | 322 | 37.48 | 53.5% |
| LTP31 | 28.30 | 9.20 | | 58.70 | 0.28 | 0.29 | 0.06 | 3.00 | 0.18 | | | 40.29 | 3.15 | 4.88 | 0.70 | 91 | 60 | 205 | 31 | 387 | 37.50 | 55.1% |
| LTP36 | 33.37 | 4.82 | | 58.90 | 0.27 | 0.30 | 0.08 | 2.10 | 0.15 | | | 40.13 | 1.50 | 3.12 | 0.90 | 37 | 33 | 198 | 25 | 293 | 38.19 | 53.9% |
| LTP33 | 30.20 | 9.03 | | 59.01 | 0.27 | 0.28 | 0.08 | 0.96 | 0.17 | | | 40.02 | 2.16 | 2.74 | 1.01 | 88 | 52 | 193 | 10 | 343 | 39.23 | 56.1% |
| LTP44 | 29.05 | 6.88 | | 59.81 | 0.35 | 0.36 | 0.07 | 3.16 | 0.13 | | 0.19 | 38.82 | 1.60 | 2.71 | 1.81 | 89 | 44 | 193 | 32 | 358 | 35.93 | 52.1% |
| LTP45 | 24.10 | 11.40 | | 62.48 | 0.54 | 0.24 | 0.06 | 1.04 | 0.15 | | | 35.76 | 2.17 | 3.15 | 3.78 | 81 | 65 | 189 | 10 | 345 | 35.50 | 51.3% |
| LTP46 | 28.52 | 8.73 | 2.68 | 59.25 | 0.29 | 0.33 | 0.06 | | 0.13 | | | 37.06 | 0.91 | 0.99 | 3.93 | 71 | 46 | 175 | | 292 | 37.25 | 53.3% |
| Above here SiO2 content 58wt% or more | | | | | | | | | | | | | | | | | | | | | | |

EP 0 906 250 B1

**Claims**

1. The use of $P_2O_5$ and or $B_2O_3$ as a component to improve the refractoriness of inorganic fibres comprising $SiO_2$, and CaO and/or MgO, to produce inorganic fibres having a composition having a shrinkage of less than 3.5% when exposed to 1000°C for 24 hours and having a shrinkage of less than 3.5% when exposed to 800°C for 24 hours, the fibres having a composition such that

$$SiO_2 + P_2O_5 - (58 + (\text{if } MgO > 10, 0.5 \times (MgO - 10) \text{ else } 0)) > -2.4\text{wt\%}.$$

2. The use of $P_2O_5$ and or $B_2O_3$ as a component to improve the refractoriness of inorganic fibres as claimed in claim 1 in which the percentage of non-bridging oxygens is less than 61.4%.

3. The use of $P_2O_5$ and or $B_2O_3$ as a component to improve the refractoriness of inorganic fibres as claimed in claim 1 or claim 2 in which the fibres fall within the compositional range:-

| | |
|---|---|
| $SiO_2$ | 44wt% or more |
| CaO | 20 - 40wt% |
| MgO | 0 - 18wt% |
| $P_2O_5$ | 0- 12.5wt% |
| $B_2O_3$ | 0 - 4wt% |

4. The use of $P_2O_5$ and or $B_2O_3$ as a component to improve the refractoriness of inorganic fibres as claimed in claim 3 in which the fibres fall within the compositional range:-

| | |
|---|---|
| $SiO_2$ | 52 - <58wt% [52 - <58+0.5×(MgO-10)wt% if MgO > 10wt%] |
| CaO | 22 - 40wt% |
| MgO | 0 - 17.5wt% |
| MgO + CaO | < 42wt% |
| $P_2O_5$ | 0.5 - 10wt% |
| $B_2O_3$ | 0 - 2wt% |

5. The use of $P_2O_5$ and or $B_2O_3$ as a component to improve the refractoriness of inorganic fibres as claimed in claim 1 in which the fibres fall within the compositional range:-

| | |
|---|---|
| $SiO_2$ | 44.34 - 62.48 |
| CaO | 20.36 - 39.4wt% |
| MgO | 0.62 - 21,16wt% |
| $P_2O_5$ | 0 - 12.01 wt% |
| $B_2O_3$ | 0 - 3.54wt% |

6. Saline soluble inorganic fibres having a shrinkage of less than 3.5% when exposed to 1000°C for 24 hours and having a shrinkage of less than 3.5% when exposed to 800°C for 24 hours, in which:-

$$SiO_2 + P_2O_5 - (58 + (\text{if } MgO > 10, 0.5 \times (MgO - 10) \text{ else } 0)) > -2.4\text{wt\%}$$

and comprising: -

| | |
|---|---|
| $SiO_2$ | 52 - <58wt% [52 - <58+0.5(MgO-10)wt% if MgO > 10wt%] |
| CaO | 22 - 40wt% |
| MgO | 0 - 17.5wt% |
| MgO + CaO | < 42wt% |
| $P_2O_5$ | 0.5 - 10wt% |

(continued)

| B$_2$O$_3$ | 0 - 2wt% |
|---|---|
| Al$_2$O$_3$ | <1wt% |

and in which the percentage of non-bridging oxygens calculated on the basis of the amounts of the above named components is less than 61.4%.

**7.** Saline soluble inorganic fibres'having a shrinkage of less than 3.5% when exposed to 1000°C for 24 hours and having a shrinkage of less than 3.5% when exposed to 800°C for 24 hours, in which:-

$$SiO_2 + P_2O_5 - (58 + (if\ MgO > 10, 0.5 \times (MgO\text{-}10)\ else\ 0)) > - 2.4wt\%$$

and comprising:-

| SiO$_2$ | 44.34 - 62.48 |
|---|---|
| CaO | 20.36 - 39.4wt% |
| MgO | 0.62 - 21.16wt% |
| Al$_2$O$_3$ | <1 wt% |

and also comprising either or both of:-

| P$_2$O$_5$ | 0 - 12.01wt% |
|---|---|
| B$_2$O$_3$ | 0 - 3.54wt% |

**8.** Saline soluble inorganic fibres having a shrinkage of less than 3.5% when exposed to 1000°C for 24 hours and having a shrinkage of less than 3.5% when exposed to 800°C for 24 hours, in which:-

$$SiO_2 + P_2O_5 - (58 + (if\ MgO > 10, 0.5 \times (MgO\text{-}10)\ else\ 0)) > -2.4wt\%$$

and comprising: -

| SiO$_2$ | 52.4 - 57.85wt% |
|---|---|
| CaO | 22.2 - 39.4wt% |
| MgO | 1.96 - 17.4wt% |
| P$_2$O$_5$ | 0.82 - 7.8wt% |
| B$_2$O$_3$ | 0 - 1.95wt% |
| Al$_2$O$_3$ | <1 wt% |

**9.** A saline soluble fibre selected from the group having the compositions (in wt%): -: -

| CaO | MgO | P$_2$O$_5$ | SiO$_2$ | Al$_2$O$_3$ | Na$_2$O | K$_2$O | B$_2$O$_3$ | Fe$_2$O$_3$ | ZrO$_2$ | SrO |
|---|---|---|---|---|---|---|---|---|---|---|
| 15.65 | 21.16 | 4.38 | 58.17 | 0.24 | 0.25 | | | 0.15 | | |
| 19.17 | 17.56 | 4.66 | 57.93 | 0.31 | 0.23 | | | 0.13 | | |
| 20.36 | 17.74 | 2.50 | 58.75 | 0.30 | 0.22 | | | 0.13 | | |
| 22.30 | 17.48 | 4.00 | 55.45 | 0.31 | 0.31 | 0.05 | | 0.10 | | |
| 23.29 | 15.66 | 3.33 | 57.01 | 0.24 | 0.22 | 0.06 | | 0.14 | | 0.05 |
| 23.35 | 16.10 | 4.87 | 54.25 | 0.46 | 0.24 | | | 0.16 | 0.58 | |
| 24.10 | 11.40 | | 62.48 | 0.54 | 0.24 | 0.06 | 1.04 | 0.15 | | |
| 28.52 | 8.73 | 2.68 | 59.25 | 0.29 | 0.33 | 0.06 | | 0.13 | | |
| 28.9 | 1 9.33 | 3.66 | 57.32 | 0.22 | 0.36 | 0.05 | | 0.14 | | |

(continued)

| CaO | MgO | P$_2$O$_5$ | SiO$_2$ | Al$_2$O$_3$ | Na$_2$O | K$_2$O | B$_2$O$_3$ | Fe$_2$O$_3$ | ZrO$_2$ | SrO |
|------|------|------|------|------|------|------|------|------|------|------|
| 29.05 | 6.88 | | 59.81 | 0.35 | 0.36 | 0.07 | 3.16 | 0.13 | | 0.19 |
| 29.34 | 9.84 | 9.58 | 50.26 | 0.17 | 0.56 | 0.05 | | 0.15 | 0.05 | |
| 29.83 | 10.45 | 3.34 | 55.65 | 0.21 | 0.32 | 0.05 | | 0.15 | | |
| 30.0 | 1 8.53 | | 57.95 | 0.32 | 0.23 | 0.09 | 2.69 | 0.18 | | |
| 30.20 | 9.03 | | 59.01 | 0.27 | 0.28 | 0.08 | 0.96 | 0.17 | | |
| 30.44 | 9.81 | 1.68 | 57.30 | 0.25 | 0.31 | 0.07 | | 0.15 | | |
| 30.51 | 9.68 | 1.68 | 56.19 | 0.28 | 0.32 | 0.07 | 1.11 | 0.15 | | |
| 30.55 | 9.56 | 0.86 | 57.13 | 0.27 | 0.33 | 0.07 | 1.08 | 0.15 | | |
| 31.36 | 9.48 | 0.85 | 55.63 | 0.27 | 0.30 | 0.07 | 1.88 | 0.16 | | |
| 31.90 | 6.85 | 7.78 | 52.24 | 0.52 | 0.34 | 0.05 | | 0.15 | 0.18 | |
| 32.58 | 9.47 | 9.65 | 46.79 | 0.84 | 0.46 | 0.05 | | 0.17 | | |
| 32.93 | 9.77 | 12.01 | 44.34 | 0.19 | 0.53 | 0.05 | | 0.19 | | |
| 33.37 | 4.82 | | 58.90 | 0.27 | 0.30 | 0.08 | 2.10 | 0.15 | | |
| 33.67 | 4.75 | 0.86 | 57.85 | 0.38 | 0.31 | 0.08 | 1.95 | 0.15 | | |
| 33.69 | 4.56 | 3.73 | 56.95 | 0.36 | 0.43 | 0.06 | | 0.14 | 0.07 | |
| 34.35 | 4.73 | 1.67 | 57.39 | 0.27 | 0.30 | 0.08 | 1.06 | 0.14 | | |
| 34.82 | 4.73 | 0.82 | 57.84 | 0.31 | 0.30 | 0.08 | 0.94 | 0.15 | | |
| 35.40 | 4.77 | | 57.92 | 0.31 | 0.31 | 0.09 | 1.05 | 0.15 | | |
| 36.93 | 0.62 | | 57.96 | 0.49 | 0.23 | 0.09 | 3.54 | 0.13 | | |
| 38.31 | 0.65 | | 56.51 | 0.55 | 0.20 | 0.09 | 3.54 | 0.14 | | |
| 39.40 | 1.96 | 2.22 | 55.25 | 0.45 | 0.41 | 0.10 | | 0.21 | | |

**Patentansprüche**

1. Verwendung von P$_2$O$_5$ und/oder B$_2$O$_3$ als Komponenten zur Verbesserung der Feuerbeständigkeit von anorganischen Fasern, die SiO$_2$ und CaO und/oder MgO enthalten, um anorganische Fasern zu erzeugen, die eine Zusammensetzung haben, welche eine Schrumpfung von weniger als 3,5% besitzt, wenn sie einer Temperatur von 1000 °C für 24 Stunden ausgesetzt ist, und eine Schrumpfung von weniger als 3,5% besitzt, wenn sie einer Temperatur von 800 °C für 24 Stunden ausgesetzt ist, wobei die Fasern eine solche Zusammensetzung haben, daß nachstehende Beziehung gilt:

$$SiO_2 + P_2O_5 - (58 + (wenn\ MgO > 10,\ 0,5\ x\ (MgO - 10),\ sonst\ 0)) > - 2,4\ Gew.\text{-}\%.$$

2. Verwendung von P$_2$O$_5$ und/oder B$_2$O$_3$ als Komponenten zur Verbesserung der Feuerbeständigkeit von anorganischen Fasern gemäß Anspruch 1,
wobei der prozentuale Anteil von Sauerstoff, der kein Brückensauerstoff ist, weniger als 61,4% beträgt.

3. Verwendung von P$_2$O$_5$ und/oder B$_2$O$_3$ als Komponenten zur Verbesserung der Feuerbeständigkeit von anorganischen Fasern nach Anspruch 1 oder Anspruch 2, wobei die Fasern innerhalb des nachstehenden Zusammensetzungsbereiches liegen:

| | |
|------|------|
| SiO$_2$ | 44 Gew.-% oder mehr |
| CaO | 20 - 40 Gew.-% |
| MgO | 0 - 18 Gew.-% |
| P$_2$O$_5$ | 0 - 12,5 Gew.-% |
| B$_2$O$_3$ | 0- 4 Gew.-%. |

4. Verwendung von P$_2$O$_5$ und/oder B$_2$O$_3$ als Komponenten zur Verbesserung der Feuerfestigkeit von anorganischen Fasern nach Anspruch 3, wobei die Fasern innerhalb des nachstehenden Zusammensetzungsbereiches liegen:

| SiO$_2$ | 52 - < 58 Gew.-% [52 - < 58 + 0,5 x (MgO - 10) Gew.-%, wenn MgO > 10 Gew.-%] |
| CaO | 22 - 40 Gew.-% |
| MgO | 0 - 17,5 Gew.-% |
| MgO + CaO | < 42 Gew.-% |
| P$_2$O$_5$ | 0,5-10 Gew.-% |
| B$_2$O$_3$ | 0 - 2 Gew.-% |

**5.** Verwendung von P$_2$O$_5$ und/oder B$_2$O$_3$ als Komponenten zur Verbesserung der Feuerbeständigkeit von anorganischen Fasern nach Anspruch 1,
wobei die Fasern innerhalb des nachstehenden Zusammensetzungsbereiches liegen:

| SiO$_2$ | 44,34-62,48 Gew.-% |
| CaO | 20,36 - 39,4 Gew.-% |
| MgO | 0,62 - 21,16 Gew.-% |
| P$_2$O$_5$ | 0 - 12,01 Gew.-% |
| B$_2$O$_3$ | 0 - 3,54 Gew.-%. |

**6.** In einer Salzlösung lösliche anorganische Fasern mit einer Schrumpfung von weniger als 3,5%, wenn sie einer Temperatur von 1000 °C für 24 Stunden ausgesetzt sind, und mit einer Schrumpfung von weniger als 3,5%, wenn sie einer Temperatur von 800 °C für 24 Stunden ausgesetzt sind, wobei folgende Relation gilt:

$$SiO_2 + P_2O_5 - (58 + (\text{wenn MgO} > 10, 0,5 \text{ x (MgO - 10), sonst 0)}) > -2,4 \text{ Gew.-\%.}$$

und die folgendes aufweisen:

| SiO$_2$ | 52 - < 58 Gew.-% [52 - < 58 + 0,5 x (MgO- 10) Gew.-%, wenn MgO > 10 Gew.-%] |
| CaO | 22-40 Gew.-% |
| MgO | 0-17,5 Gew.-% |
| MgO + CaO | < 42 Gew.-% |
| P$_2$O$_5$ | 0,5-10 Gew.-% |
| B$_2$O$_3$ | 0 - 2 Gew.-% |
| Al$_2$O$_3$ | < 1 Gew.-%, |

wobei der prozentuale Anteil von Sauerstoff, der kein Brückensauerstoff ist, berechnet auf der Basis der Mengen der oben angegebenen Komponenten, weniger als 61,4% beträgt.

**7.** In einer Salzlösung lösliche anorganische Fasern mit einer Schrumpfung von weniger als 3,5%, wenn sie einer Temperatur von 1000 °C für 24 Stunden ausgesetzt sind, und mit einer Schrumpfung von weniger als 3,5%, wenn sie einer Temperatur von 800 °C für 24 Stunden ausgesetzt sind, wobei folgende Relation gilt:

$$SiO_2 + P_2O_5 - (58 + (\text{wenn MgO} > 10, 0,5 \text{ x (MgO - 10), sonst 0)}) > -2,4 \text{ Gew.-\%.}$$

und die folgendes aufweisen:

| SiO$_2$ | 44,34 - 62,48 Gew.-% |
| CaO | 20,36 - 39,4 Gew.-% |
| MgO | 0,62 - 21,16 Gew.-% |
| Al$_2$O$_3$ | < 1 Gew.-% |

und die ferner eine oder beide von folgenden Komnonenten aufweisen:

| P$_2$O$_5$ | 0 - 12,01 Gew.-% |
|---|---|
| B$_2$O$_3$ | 0 - 3,54 Gew.-%. |

**8.** In einer Salzlösung lösliche anorganische Fasern mit einer Schrumpfung von weniger als 3,5%, wenn sie einer Temperatur von 1000 °C für 24 Stunden ausgesetzt-sind, und mit einer Schrumpfung von weniger als 3,5%, wenn sie einer Temperatur von 800 °C für 24 Stunden ausgesetzt sind, wobei folgende Relation gilt:

$$SiO_2 + P_2O_5 - (58 + (\text{wenn MgO} > 10, 0{,}5 \times (MgO - 10), \text{sonst } 0)) > -2{,}4 \text{ Gew.-\%.}$$

und die folgendes aufweisen:

| SiO$_2$ | 52,4 - 57,85 Gew.-% |
|---|---|
| CaO | 22,2 - 39,4 Gew.-% |
| MgO | 1,96 - 17,4 Gew.-% |
| P$_2$O$_5$ | 0,82- 7,8 Gew.-% |
| B$_2$O$_3$ | 0 - 1,95 Gew.-% |
| Al$_2$O$_3$ | < 1 Gew.-%. |

**9.** In einer Salzlösung lösliche Faser, die aus einer Gruppe ausgewählt ist, die folgende Zusammensetzungen in Gew.-% aufweist:

| CaO | MgO | P$_2$O$_5$ | SiO$_2$ | Al$_2$O$_3$ | Na$_2$O | K$_2$O | B$_2$O$_3$ | Fe$_2$O$_3$ | ZrO$_2$ | SrO |
|---|---|---|---|---|---|---|---|---|---|---|
| 15,65 | 21,16 | 4,38 | 58,17 | 0,24 | 0,25 | | | 0,15 | | |
| 19,17 | 17,56 | 4,66 | 57,93 | 0,31 | 0,23 | | | 0,13 | | |
| 20,36 | 17,74 | 2,50 | 58,75 | 0,30 | 0,22 | | | 0,13 | | |
| 22,30 | 17,48 | 4,00 | 55,45 | 0,31 | 0,31 | 0,05 | | 0,10 | | |
| 23,29 | 15,66 | 3,33 | 57,01 | 0,24 | 0,22 | 0,06 | | 0,14 | | 0,05 |
| 23,35 | 16,10 | 4,87 | 54,25 | 0,46 | 0,24 | | | 0,16 | 0,58 | |
| 24,10 | 11,40 | | 62,48 | 0,54 | 0,24 | 0,06 | 1,04 | 0,15 | | |
| 28,52 | 8,73 | 2,68 | 59,25 | 0,29 | 0,33 | 0,06 | | 0,13 | | |
| 28,91 | 9,33 | 3,66 | 57,32 | 0,22 | 0,36 | 0,05 | | 0,14 | | |
| 29,05 | 6,88 | | 59,81 | 0,35 | 0,36 | 0,07 | 3,16 | 0,13 | | 0,19 |
| 29,34 | 9,84 | 9,58 | 50,26 | 0,17 | 0,56 | 0,05 | | 0,15 | 0,05 | |
| 29,83 | 10,45 | 3,34 | 55,65 | 0,21 | 0,32 | 0,05 | | 0,15 | | |
| 30,01 | 8,53 | | 57,95 | 0,32 | 0,23 | 0,09 | 2,69 | 0,18 | | |
| 30,20 | 9,03 | | 59,01 | 0,27 | 0,28 | 0,08 | 0,96 | 0,17 | | |
| 30,44 | 9,81 | 1,68 | 57,30 | 0,25 | 0,31 | 0,07 | | 0,15 | | |
| 30,51 | 9,68 | 1,68 | 56,19 | 0,28 | 0,32 | 0,07 | 1,11 | 0,15 | | |
| 30,55 | 9,56 | 0,86 | 57,13 | 0,27 | 0,33 | 0,07 | 1,08 | 0,15 | | |
| 31,36 | 9,48 | 0,85 | 55,63 | 0,27 | 0,30 | 0,07 | 1,88 | 0,16 | | |
| 31,90 | 6,85 | 7,78 | 52,24 | 0,52 | 0,34 | 0,05 | | 0,15 | 0,18 | |
| 32,58 | 9,47 | 9,65 | 46,79 | 0,84 | 0,46 | 0,05 | | 0,17 | | |
| 32,93 | 9,77 | 12,01 | 44,34 | 0,19 | 0,53 | 0,05 | | 0,19 | | |
| 33,37 | 4,82 | | 58,90 | 0,27 | 0,30 | 0,08 | 2,10 | 0,15 | | |
| 33,67 | 4,75 | 0,86 | 57,85 | 0,38 | 0,31 | 0,08 | 1,95 | 0,15 | | |
| 33,69 | 4,56 | 3,73 | 56,95 | 0,36 | 0,43 | 0,06 | | 0,14 | 0,07 | |
| 34,35 | 4,73 | 1,67 | 57,39 | 0,27 | 0,30 | 0,08 | 1,06 | 0,14 | | |
| 34,82 | 4,73 | 0,82 | 57,84 | 0,31 | 0,30 | 0,08 | 0,94 | 0,15 | | |
| 35,40 | 4,77 | | 57,92 | 0,31 | 0,31 | 0,09 | 1,05 | 0,15 | | |
| 36,93 | 0,62 | | 57,96 | 0,49 | 0,23 | 0,09 | 3,54 | 0,13 | | |

(fortgesetzt)

| CaO | MgO | $P_2O_5$ | $SiO_2$ | $Al_2O_3$ | $Na_2O$ | $K_2O$ | $B_2O_3$ | $Fe_2O_3$ | $ZrO_2$ | SrO |
|---|---|---|---|---|---|---|---|---|---|---|
| 38,31 | 0,65 | | 56,51 | 0,55 | 0,20 | 0,09 | 3,54 | 0,14 | | |
| 39,40 | 1,96 | 2,22 | 55,25 | 0,45 | 0,41 | 0,10 | | 0,21 | | |

**Revendications**

1. Utilisation de $P_2O_5$ et/ou de $B_2O_3$ comme composant pour améliorer la réfractairité de fibres minérales comprenant $SiO_2$ et CaO et/ou MgO, pour produire des fibres minérales ayant une composition dont le retrait est inférieur à 3,5 % lorsqu'elles sont exposées à 1000°C pendant 24 heures et dont le retrait est inférieur à 3,5 % lorsqu'elles sont exposées à 800°C pendant 24 heures, les fibres ayant une composition telle que

$$SiO_2 + P_2O_5 - (58 + (\text{si MgO} > 10,\ 0,5 \times (\text{MgO} - 10),\ \text{sinon } 0)) > -2,4 \text{ % en poids.}$$

2. Utilisation de $P_2O_5$ et/ou de $B_2O_3$ comme composant pour améliorer la réfractairité de fibres minérales selon la revendication 1, dans laquelle le pourcentage d'atomes d'oxygène non pontants est inférieur à 61,4 %.

3. Utilisation de $P_2O_5$ et/ou de $B_2O_3$ comme composant pour améliorer la réfractairité de fibres minérales selon la revendication 1 ou la revendication 2, dans laquelle les fibres s'inscrivent dans la région de composition suivante :

| | |
|---|---|
| $SiO_2$ | 44 % en poids ou plus |
| CaO | 20 à 40 % en poids |
| MgO | 0 à 18 % en poids |
| $P_2O_5$ | 0 à 12,5 % en poids |
| $B_2O_3$ | 0 à 4 % en poids |

4. Utilisation de $P_2O_5$ et/ou de $B_2O_3$ comme composant pour améliorer la réfractairité de fibres minérales selon la revendication 3, dans laquelle les fibres s'inscrivent dans la région de composition suivante :

| | |
|---|---|
| $SiO_2$ | 52 à <58 % en poids [52 à <58+0,5×(MgO-10) % en poids si MgO > 10 % en poids] |
| CaO | 22 à 40 % en poids |
| MgO | 0 à 17,5 % en poids |
| MgO + CaO | <42 % en poids |
| $P_2O_5$ | 0,5 à 10 % en poids |
| $B_2O_3$ | 0 à 2 % en poids |

5. Utilisation de $P_2O_5$ et/ou de $B_2O_3$ comme composant pour améliorer la réfractairité de fibres minérales selon la revendication 1, dans laquelle les fibres s'inscrivent dans la région de composition suivante :

| | |
|---|---|
| $SiO_2$ | 44,34 à 62,48 |
| CaO | 20,36 à 39,4 % en poids |
| MgO | 0,62 à 21,16 % en poids |
| $P_2O_5$ | 0 à 12,01 % en poids |
| $B_2O_3$ | 0 à 3,54 % en poids |

6. Fibres minérales solubles en solution saline, ayant un retrait inférieur à 3,5 % lorsqu'elles sont exposées à 1000°C pendant 24 heures et ayant un retrait inférieur à 3,5 % lorsqu'elles sont exposées à 800°C pendant 24 heures, dans lesquelles :

$$SiO_2 + P_2O_5 - (58 + (\text{si MgO} > 10,\ 0,5 \times (\text{MgO} - 10),\ \text{sinon } 0)) > -2,4 \text{ % en poids}$$

et comprenant

| | |
|---|---|
| $SiO_2$ | 52 à <58 % en poids [52 à <58+0,5×(MgO-10) % en poids si MgO > 10 % en poids] |
| CaO | 22 à 40 % en poids |
| MgO | 0 à 17,5 % en poids |
| MgO + CaO | <42 % en poids |
| $P_2O_5$ | 0,5 à 10 % en poids |
| $B_2O_3$ | 0 à 2 % en poids |
| $Al_2O_3$ | <1 % en poids |

et dans lesquelles le pourcentage d'atomes d'oxygène non pontants, calculé sur la base des quantités des composants susmentionnés, est inférieur à 61,4 %.

**7.** Fibres minérales solubles en solution saline, ayant un retrait inférieur à 3,5 % lorsqu'elles sont exposées à 1000°C pendant 24 heures et ayant un retrait inférieur à 3,5 % lorsqu'elles sont exposées à 800°C pendant 24 heures, dans lesquelles :

$$SiO_2 + P_2O_5 - (58 + (si\ MgO > 10,\ 0,5 \times (MgO - 10)\ autre\ que\ 0)) > -2,4\ \%\ en\ poids$$

et comprenant :

| | |
|---|---|
| $SiO_2$ | 44,34 à 62,48 |
| CaO | 20,36 à 39,4 % en poids |
| MgO | 0,62 à 21,16 % en poids |
| $Al_2O_3$ | < 1 % en poids |

et comprenant également l'un et/ou l'autre de :

| | |
|---|---|
| $P_2O_5$ | 0 à 12,01 % en poids |
| $B_2O_3$ | 0 à 3,54 % en poids |

**8.** Fibres minérales solubles en solution saline, ayant un retrait inférieur à 3,5 % lorsqu'elles sont exposées à 1000°C pendant 24 heures et ayant un retrait inférieur à 3,5 % lorsqu'elles sont exposées à 800°C pendant 24 heures, dans lesquelles :

$$SiO_2 + P_2O_5 - (58 + (si\ MgO > 10,\ 0,5 \times (MgO - 10),\ sinon\ 0)) > -2,4\ \%\ en\ poids$$

et comprenant

| | |
|---|---|
| $SiO_2$ | 52,4 à 57,85 % en poids |
| CaO | 22,2 à 39,4 % en poids |
| MgO | 1,96 à 17,4 % en poids |
| $P_2O_5$ | 0,82 à 7,8 % en poids |
| $B_2O_3$ | 0 à 1,95 % en poids |
| $Al_2O_3$ | <1 % en poids |

**9.** Fibre soluble en solution saline, choisie dans le groupe ayant les compositions suivantes (en % en poids) :

| CaO | MgO | $P_2O_5$ | $SiO_2$ | $Al_2O_3$ | $Na_2O$ | $K_2O$ | $B_2O_3$ | $Fe_2O_3$ | $ZrO_2$ | SrO |
|---|---|---|---|---|---|---|---|---|---|---|
| 15,65 | 21,16 | 4,38 | 58,17 | 0,24 | 0,25 | | | 0,15 | | |
| 19,17 | 17,56 | 4,66 | 57,93 | 0,31 | 0,23 | | | 0,13 | | |

(suite)

| CaO | MgO | $P_2O_5$ | $SiO_2$ | $Al_2O_3$ | $Na_2O$ | $K_2O$ | $B_2O_3$ | $Fe_2O_3$ | $ZrO_2$ | SrO |
|---|---|---|---|---|---|---|---|---|---|---|
| 20,36 | 17,74 | 2,50 | 58,75 | 0,30 | 0,22 | | | 0,13 | | |
| 22,30 | 17,48 | 4,00 | 55,45 | 0,31 | 0,31 | 0,05 | | 0,10 | | |
| 23,29 | 15,66 | 3,33 | 57,01 | 0,24 | 0,22 | 0,06 | | 0,14 | | 0,05 |
| 23,35 | 16,10 | 4,87 | 54,25 | 0,46 | 0,24 | | | 0,16 | 0,58 | |
| 24,10 | 11,40 | | 62,48 | 0,54 | 0,24 | 0,06 | 1,04 | 0,15 | | |
| 28,52 | 8,73 | 2,68 | 59,25 | 0,29 | 0,33 | 0,06 | | 0,13 | | |
| 28,91 | 9,33 | 3,66 | 57,32 | 0,22 | 0,36 | 0,05 | | 0,14 | | |
| 29,05 | 6,88 | | 59,81 | 0,35 | 0,36 | 0,07 | 3,16 | 0,13 | | 0,19 |
| 29,34 | 9,84 | 9,58 | 50,26 | 0,17 | 0,56 | 0,05 | | 0,15 | 0,05 | |
| 29,83 | 10,45 | 3,34 | 55,65 | 0,21 | 0,32 | 0,05 | | 0,15 | | |
| 30,01 | 8,53 | | 57,95 | 0,32 | 0,23 | 0,09 | 2,69 | 0,18 | | |
| 30,20 | 9,03 | | 59,01 | 0,27 | 0,28 | 0,08 | 0,96 | 0,17 | | |
| 30,44 | 9,81 | 1,68 | 57,30 | 0,25 | 0,31 | 0,07 | | 0,15 | | |
| 30,51 | 9,68 | 1,68 | 56,19 | 0,28 | 0,32 | 0,07 | 1,11 | 0,15 | | |
| 30,55 | 9,56 | 0,86 | 57,13 | 0,27 | 0,33 | 0,07 | 1,08 | 0,15 | | |
| 31,36 | 9,48 | 0,85 | 55,63 | 0,27 | 0,30 | 0,07 | 1,88 | 0,16 | | |
| 31,90 | 6,85 | 7,78 | 52,24 | 0,52 | 0,34 | 0,05 | | 0,15 | 0,18 | |
| 32,58 | 9,47 | 9,65 | 46,79 | 0,84 | 0,46 | 0,05 | | 0,17 | | |
| 32,93 | 9,77 | 12,01 | 44,34 | 0,19 | 0,53 | 0,05 | | 0,19 | | |
| 33,37 | 4,82 | | 58,90 | 0,27 | 0,30 | 0,08 | 2,10 | 0,15 | | |
| 33,67 | 4,75 | 0,86 | 57,85 | 0,38 | 0,31 | 0,08 | 1,95 | 0,15 | | |
| 33,69 | 4,56 | 3,73 | 56,95 | 0,36 | 0,43 | 0,06 | | 0,14 | 0,07 | |
| 34,35 | 4,73 | 1,67 | 57,39 | 0,27 | 0,30 | 0,08 | 1,06 | 0,14 | | |
| 34,82 | 4,73 | 0,82 | 57,84 | 0,31 | 0,30 | 0,08 | 0,94 | 0,15 | | |
| 35,40 | 4,77 | | 57,92 | 0,31 | 0,31 | 0,09 | 1,05 | 0,15 | | |
| 36,93 | 0,62 | | 57,96 | 0,49 | 0,23 | 0,09 | 3,54 | 0,13 | | |
| 38,31 | 0,65 | | 56,51 | 0,55 | 0,20 | 0,09 | 3,54 | 0,14 | | |
| 39,40 | 1,96 | 2,22 | 55,25 | 0,45 | 0,41 | 0,10 | | 0,21 | | |